# EUROPÄISCHE PATENTSCHRIFT

(11) **EP 1 485 265 B1**
(45) Veröffentlichungstag und Bekanntmachung des Hinweises auf die Patenterteilung: **01.03.2006**
(21) Anmeldenummer: 02787380.1
(22) Anmeldetag: 19.11.2002
(51) Int. Cl.: B60C 23/02, B60R 21/01

(54) **VERFAHREN UND ANORDNUNG ZUM SCHÜTZEN EINES FAHRZEUGINSASSEN**
METHOD AND SYSTEM FOR PROTECTING A PASSENGER OF A VEHICLE
PROCEDE ET DISPOSITIF POUR PROTEGER UN OCCUPANT D'UN VEHICULE

(30) Priorität: 13.03.2002 DE 10210928
(43) Veröffentlichungstag der Anmeldung: 15.12.2004
(73) Patentinhaber: ROBERT BOSCH GMBH, 70442 Stuttgart (DE)
(72) Erfinder: WEBER, Dirk, 70195 Stuttgart (DE); KUTTENBERGER, Alfred, 71696 Moeglingen (DE)
(86) Internationale Anmeldenummer: PCT/DE2002/004254
(87) Internationale Veröffentlichungsnummer: WO 2003/078181

(56) Entgegenhaltungen:
- DE-A- 10 015 267
- DE-A- 19 908 701
- US-A- 5 658 011

## Beschreibung

### Stand der Technik

Die Erfindung betrifft ein Verfahren und eine Anordnung zum Schützen eines Fahrzeuginsassen bei Auftreten einer potenziell gefährlichen Situation, bei denen bei Erfassung der Situation mindestens ein zumindest reversibel ansteuerbares und dem Sitz des Fahrzeuginsassen zugeordnetes System auslösbar ist.

Jedenfalls bei Fahrzeugen der gehobenen Klasse ist es bekannt, bei Erfassen eines Unfalls, wie dem Aufprall auf ein Hindernis (Crash) reversible und/oder irreversible Rückhaltemittel, wie einen Gurtstraffer bzw. einen Airbag auszulösen, um den Fahrzeuginsassen vor jedenfalls ernsthaften Verletzungen zu schützen. Ferner ist es bekannt, durch Auswertung von erfassten Signalen wie Entfernungssignalen und deren Bewertung eine Aussage darüber zu ermitteln, ob mit hoher Wahrscheinlichkeit mit einem unmittelbar bevorstehendem Unfall zu rechnen ist, und im gegebenen Fall reversible Systeme ansteuern, die den Fahrzeuginsassen in eine Position bringen, die zur Vermeidung von Verletzungen im tatsächlichen Unfall-Fall besonders günstig sind. Eines dieser Systeme ist ein Gurtstraffer, mittels dem der Fahrzeuginsasse bei einer solchen potenziell gefährlichen Situation in seinem Sitz fixiert wird, damit der Insasse bei einem nachfolgenden Unfall in einer besseren Position für eine Auslösung eines Airbags ist (vgl. z. B. DE 44 11 184C2). Aus dem Dokument DE 100 15267 A1 ist eine Vorrichtung nach dem Oberbegriff des Anspruchs 5 bekannt.

Eine gefährliche Situation bei der die bekannten Vorgehensweisen jedoch versagen oder zu spät eingreifen, ist das Auftreten eines Reifenplatzers. Bei einem Reifenplatzer kann es zum Schleudern des Fahrzeuges kommen, was zu einem gefährlichen Unfall führen kann. Selbst wenn der Fahrzeuglenker in der Lage ist, bei einem Reifenplatzer das Fahrzeug abzufangen, können die Beifahrer durch durch das Schleudern verursachte Pendelbewegungen des Oberkörpers mit dem Kopf gegen das Fenster schlagen oder dergleichen, da der Beifahrer in der Regel wesentlich unaufmerksamer ist als der Fahrzeuglenker. Falls es zu einem Unfall aufgrund des Schleuderns des Fahrzeuges kommt, kann die Ansteuerung der reversiblen und/oder irreversiblen Systeme nur aufgrund der zu deren Ansteuerung üblicherweise verwendeten Auswertungen erfolgen.

### Vorteile der Erfindung

Es ist daher Aufgabe der Erfindung ein Verfahren und eine Anordnung abzugeben, mittels denen ein Fahrzeuginsasse auch schützbar ist, wenn eine solche unerwartet auftretende potenziell gefährliche Situation, wie ein Reifenplatzer oder ein schneller Abfall des Reifendrucks auftritt.

Die Aufgabe wird gemäß der Erfindung durch die Merkmale der unabhängigen Ansprüche gelöst. Die Erfindung wird durch die Merkmale der abhängigen Ansprüche weitergebildet.

Die Erfindung geht dabei von der Erkenntnis aus, dass es ansich bekannt ist, jedenfalls bei Fahrzeugen der gehobenen Klasse, den Reifendruck zu überwachen, wozu jedem Reifen ein Drucksensor zugeordnet ist und ein dem Ist-Druck des Reifens entsprechendes Signal dem Fahrzeuglenker zur Anzeige gebracht wird.

Die Erfindung geht somit von der Erkenntnis aus, dass dieses ansich bekannte Anzeigesignal über den Ist-Reifendruck weiterverarbeitet werden kann, um eine Aussage über einen schnellen Druckabfall in einem der Reifen, wie durch einen Reifenplatzer, zu erhalten, wobei diese Aussage wiederum weiterverarbeitet werden kann, um z. B. reversible Gurtstraffer anzusteuern, um den oder die Insassen in dieser potenziell gefährlichen Situation im jeweiligen Sitz zu fixieren, um so Pendelbewegungen des Oberkörpers zu reduzieren, falls es als Folge eines Reifenplatzers zu einem Schleudern des Fahrzeugs kommt. Dadurch wird verhindert, dass der Insasse mit dem Kopf gegen das Fenster schlägt. Darüber hinaus ist der Insasse dann, wenn es als Folge des Schleuderns zu einem Unfall kommt, in einer besseren Position für die Auslösung eines Airbags. In ähnlicher Weise ist es bei Erfassen des Reifenplatzers selbstverständlich auch möglich die Sitzposition des betroffenen Insassen in die für die Auslösung eines Airbags optimale Position zu bringen, etwa durch Verstellen der Rücklehne und/oder der Kopfstützen, oder dergleichen.

Das Erfassen des Vorliegens eines Reifenplatzers kann somit auch als eines der Signale verwendet werden, mittels denen die mindestens eine Auslöseschwelle der reversiblen und/oder irreversiblen Rückhaltesystem an die jeweils gegebene Situation anpassbar ist, wie dies mit Hilfe anderer eine Ist-Situation erfassenden Signale ansich bekannt ist bzw. vorgeschlagen worden ist.

### Zeichnung

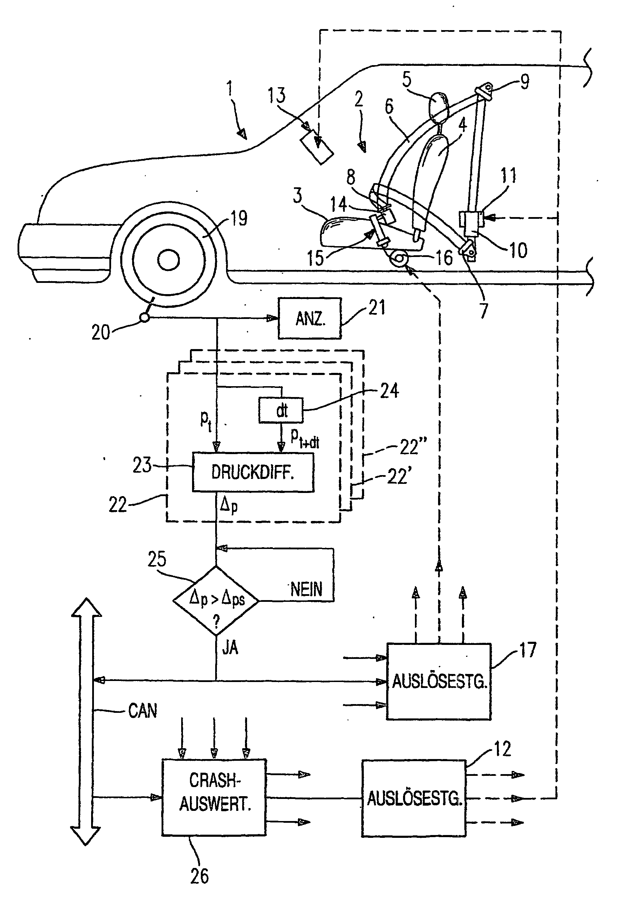

Die Erfindung wird anhand des in der Zeichnung dargestellten schematischen Ausführungsbeispiels näher erläutert. Die einzige Figur zeigt die Anwendung der Erfindung bei einem Gurtstraffersystem.

### Beschreibung der Ausführungsbeispiele

In einem Fahrzeug 1 ist einem Sitz 2 mit Sitzfläche 3, Rücklehne 4 und Kopfstütze 5 ein Rückhaltegurt 6 zugeordnet. Ein Ende 7 des Gurts 6 ist an der Karosserie des Fahrzeugs 1, beispielsweise einer Säule des Chassis fixiert (Endbeschlag). An einem Abschnitt ist der Gurt 6 um den nicht dargestellten Fahrzeuginsassen gelegt mit einer Gurtzunge 8 fixierbar. Der Gurt 6 ist ferner über eine Umlenkung 9 am Fahrzeug 1 zu einem Gurtstraffer 10 geführt, dem zum Straffen des Gurtes 6 ein ansteuerbarer Elektromotor oder eine ansteuerbare Zündeinrichtung 11 zugeordnet ist. Die Ansteuerung der Zündeinrichtung 11 erfolgt von einer Auslösesteuerung 12 aus, die den Gurtstraffer 10 dann zum Aufwickeln des Gurts 6 ansteuert, wenn ein Unfall (Crash) erkannt ist, wie das weiter unter erläutert wird.

Dem Sitz 2 ist ferner ein irreversibles System, nämlich ein auslösbarer Airbag 13 zugeordnet, der ebenfalls durch die Auslösesteuerung 12 ansteuerbar ist, also zündbar ist, wenn ein Unfall erfasst ist.

Dem Sitz 2 und damit dem Fahrzeuginsassen können weitere auslösbare Rückhaltesysteme, wie Seitenairbag und dergleichen zugeordnet sein (nicht dargestellt).

Beim Ausführungsbeispiel ist der Gurtzunge 8, und zwar dem dem Sitz 2 zugeordneten Aufnahmeteil bzw. Gurtschloss 14 ein Spannmechanismus 15 zugeordnet, der mittels eines E-Motors 16 (reversibel) ansteuerbar ist. Die Ansteuerung erfolgt von einer Auslösesteuerung 17, wenn aufgrund von Auswertung von Parametern die hohe Wahrscheinlichkeit, dass es zu einem Unfall kommen wird, erfasst worden ist. Bei Ansteuerung bringt der Elektromotor 16 das Gurtschloss 14 und damit die Gurtzunge 8 in eine Position, bei der der Fahrzeuginsasse mittels des Gurts 6 in eine vorsorgliche, fixierte Position gebracht wird, damit im Falle eines Unfalls der Gurtstraffer 10 den Gurt 6 schneil in eine zum Schutz des Fahrzeuginsassen noch bessere Position bringen kann. Diese sogenannte Precrash-Vorgehensweise ist auch auf andere Systeme anwendbar, mittels denen ein Fahrzeuginsasse in eine für den Unfall-Fall (Crash-Fall) günstigere Position bringbar ist, etwa eine Verstellung des Rücksitzes 4 und/oder eine Verstellung der Kopfstützen 5 und/oder eine Verstellung der Sitzfläche 3, von Armlehnen usw..

Jedem Reifen des Fahrzeugs 1, von denen nur ein Reifen 19 dargestellt ist, ist ein Reifendrucksensor 20 zugeordnet, der den Ist-Druck pₜ des Reifens 19 erfasst und ein entsprechendes Signal einer Anzeige 21 zuführt. Damit kann der Fahrzeuglenker überprüfen (kontrollieren), ob der Reifendruck ausreichend und/oder bei Reifen einer Achse gleichmäßig ist.

Gemäß der Erfindung wird das dem Ist-Druck pₜ entsprechende Signal auch einem Differenzierer 22 zugeführt, der ein einer Druckänderung Δp entsprechendes Signal abgibt.

Der Differenzierer 22 kann beispielsweise durch einen Differnzialquotientenbildner gebildet sein, oder auch einen Subtrahierer 23 aufweisen, dem das Ist-Drucksignal pₜ und ein mittels eines Verzögerungsglieds 24 verzögertes Drucksignal p_{t-dt} zugeführt wird, um das Differenzsignal Ap zu erzeugen. Schematisch ist dargestellt, dass den anderen Reifen des Fahrzeugs 1 ebenfalls Differenzierer 22', 22'' ... zugeordnet sind. Das Differenzsignal Δp wird in einem Vergleicher 25 daraufhin untersucht, ob es in seinem Wert größer ist als ein Schwellenwertsignal Δpₛ. Dieses Schwellenwertsignal Δpₛ ist so gewählt, dass es einem schnellen Druckabfall des Reifendruckes entspricht, der ein unkontrollierbaren Fahrverhalten auslösen könnte, wie ein Ausbrechen, Schleudern, oder dergleichen. Somit überschreitet der Wert des Differenzsignals Δp den Schwellenwert Δpₛ jedenfalls dann, wenn ein Reifenplatzer auftritt.

Im gegebenen Fall wird ein entsprechendes Signal als ein Parametersignal der Auslösesteuerung 17 für den Precrash-Fall zugeführt, der auch andere eine Auslösung hervorrufende Parameter-Signale zuführbar sind, wie das schematisch angedeutet ist.

Dieses Signal kann darüber hinaus über ein fahrzeuginterne Verbindungsleitung, z. B. einem Netzwerk CAN, wie andere Parametersignale einer Crash-Auswerteschaltung 26 zugeführt werden und so neben anderen Parametern, schematisch durch weite Eingangssignale dargestellt, Auslösekriterien anpassen, also die Auslöseschwelle ändern, um im Unfall-Fall die Auslösesteuerung 12 für den Crash-Fall anzusteuern.

Selbstverständlich können die beiden Auslösesteuerungen 12, 17 und die Crash-Auswerteschaltung 26 zu einer einzigen Gesamt-Schaltungsanordnung integriert sein.

Ferner können die Differenzierer 22 und Vergleicher 25 für alle Reifen 19 ebenso in eine solche Gesamt-Schaltungsanordnung integriert sein. Dies bedeutet, dass im gegebenen Fall das bereits vorhandene Ist-Drucksignal vom Druckfühler 20 lediglich zusätzlich auch der Gesamt-Schaltungsanordnung zugeführt werden muss, um die notwendigen Positionsanpassung zu erreichen. Das heißt, das Vorliegen eines plötzlichen Druckabfalles, wie eines Reifenplatzers, wird als Precrash-Fall betrachtet, dem ein Unfall (Crash) folgen kann, aber nicht notwendigerweise muss.

Durch die erfindungsgemäße Vorgehensweise wird der Fahrzeuginsasse im Fall des Erfassens eines plötzlichen Druckabfalles, wie eines Reifenplatzers, in eine günstige Sitzposition gebracht, in der er vor Verletzungen geschützt wird, die selbst dann auftreten können, wenn der Fahrzeuglenker das Fahrzeug noch abfangen kann, ohne dass es zu einem Unfall kommt.

Falls die Gesamt-Schaltungsanordnung einen Mikrorechner enthält, könne durch diesen die Differenzierer- und Vergleicherfunktionen erfüllt werden, und können die Auslöseschwellen anpassenden Funktionen zusätzlich erfüllt werden.

### Bezugszeichen Liste

- 1: Fahrzeug
- 2: sitz
- 3: Sitzfläche
- 4: Rücklehne
- 5: Kopfstütze
- 6: Rückhaltegurt
- 7: Ende von 6
- 8: Gurtzunge
- 9: Umlenkung.
- 10: Gurtstraffer
- 11: Zündeinrichtung von 10
- 12: Auslösesteuerung
- 13: Airbag
- 14: Gurtschloss
- 15: Spannmechanismus von 14
- 16: E-Motor
- 17: Auslösesteuerung
- 18: -
- 19: Reifen
- 20: Reifendrucksensor
- 21: Anzeige
- 22: Differenzierer
- 22',22'': weitere Differenzierer
- 23: Subtrahierer
- 24: Verzögerungsglied
- 25: Vergleicher
- 26: Crash-Auswerteschaltung

## Patentansprüche

1. Verfahren zum Schützen eines Fahrzeuginsassen bei Auftreten einer potentiell gefährlichen Situation, bei dem bei Erfassung dieser Situation mindestens ein zumindest ansteuerbares und dem Sitz des Fahrzeuginsassen zugeordnetes System auslösbar ist, wobei der Wert des Abfalls des Reifendrucks (Δp) mindestens eines Reifens (19) laufend erfasst wird und bei Überschreiten eines Schwellwertes (Δpₛ) das Auslösen des Systems angesteuert wird, **dadurch gekennzeichnet, dass** das System reversibel ansteuerbar ist und das der Schwellwert (Δpₛ) so bestimmt wird, dass dessen Überschreiten dem plötzlichen Druckabfall im entsprechenden Reifen (19) einem Reifenplatzer entspricht.

2. Verfahren nach Anspruch 1, **dadurch gekennzeichnet, dass** das System ein reversibel ansteuerbarer Gurtstraffer zum Fixieren des Fahrzeuginsassen in seinem Sitz (2) ist.

3. Verfahren nach Anspruch 1 oder 2, **dadurch gekennzeichnet, dass** im Fall der Auslösung der Ansteuerung des Systems dies als Vorliegen der unmittelbar bevorstehenden Möglichkeit eines Unfalls beurteilt wird und eine entsprechende Information an Ansteuermittel (12,26) zur Anpassung der Auslöseschwelle der Auslösung mindestens eines Rückhaltemittels, wie eines Airbags, übertragen wird.

4. Verfahren nach Anspruch 3, **dadurch gekennzeichnet, dass** die entsprechende Information in ein fahrzeugseitiges Netzwerk eingespeist wird und damit anderen Ansteuermitteln zur Nutzung zwecks Anpassung von Parametern und/oder Auslöseschwellen zur Verfügung gestellt wird.

5. Anordnung zum Schützen eines Fahrzeuginsassen bei Auftreten einer potentiell gefährlichen Situation, bei der bei Erfassung dieser Situation mindestens ein zumindest ansteuerbares und dem Sitz des Fahrzeuginsassen zugeordnetes System auslösbar ist, wobei mittels eines Druckfühlers (20) der Druck eines Reifens (19) erfasst wird, wobei der Wert des erfassten Drucks daraufhin untersucht wird, ob ein einen Schwellwert (Δpₛ) überschreitender Druckabfall (Δp) stattgefunden hat, und wobei im gegebenen Fall eine Auslösesteuerung (17) das System auslöst, **dadurch gekennzeichnet, dass** das System reversibel ansteuerbar ist und dass der Schwellenwert (Δpₛ) so bestimmt ist, dass dessen Überschreiten dem plötzlichen Druckabfall im entsprechenden Reifen (19) einem Reifenplatzer entspricht.

6. Anordnung nach Anspruch 5, **dadurch gekennzeichnet, dass** die Auslösesteuerung (17) den Spannmechanismus (15) eines reversiblen Gurtstraffersystems ansteuert.

7. Anordnung nach Anspruch 5 oder 6, **dadurch gekennzeichnet, dass** das Überschreiten des Schwellenwertes (Δpₛ) anzeigende Signal einer Crash-Auswerteschaltung (26) zugeführt ist zur Verwendung als ein das Vorliegen der unmittelbar bevorstehenden Möglichkeit eines Unfalls anzeigender Parameter.

8. Anordnung nach einem der Ansprüche 5 bis 7, **dadurch gekennzeichnet, dass** das Überschreiten des Schwellenwertes (Δpₛ) anzeigende Signal in ein fahrzeugseitiges Netzwerk eingespeist wird.

## Claims

1. Method for protecting an occupant of a vehicle when a potentially hazardous situation occurs, in which method at least one at least actuable system which is assigned to the seat of the occupant of the vehicle can be triggered when this situation is sensed, with the value of the drop in the tyre pressure (Δp) of at least one tyre (19) being continuously sensed and the triggering of the system being actuated when a threshold value (Δpₛ) is exceeded, **characterized in that** the system can be actuated in a reversible fashion and **in that** the threshold value (Δpₛ) is determined in such a way that its being exceeded corresponds to the sudden drop in pressure in the corresponding tyre (19) when there is a puncture.

2. Method according to Claim 1, **characterized in that** the system is a reversibly actuable seatbelt pretensioner for securing the occupant of the vehicle in his seat (2).

3. Method according to Claim 1 or 2, **characterized in that** when the actuation of the system is triggered this is assessed as meaning that there is the directly imminent possibility of an accident and an appropriate item of information is transmitted to actuation means (12, 16) for adapting the triggering threshold of the triggering of at least one restraining means such as an airbag.

4. Method according to Claim 3, **characterized in that** the corresponding item information is fed into a vehicle-mounted network and is thus made available to other actuation means for use for the purpose of the adaptation of parameters and/or triggering thresholds.

5. Arrangement for protecting an occupant of a vehicle when a potentially hazardous situation occurs, in which arrangement at least one at least actuable system which is assigned to the seat of the occupant of the vehicle can be triggered when this situation is sensed, with the pressure of a tyre (19) being sensed by means of a pressure sensor (20), with the value of the sensed pressure being examined to determine whether a drop in pressure (Δp) which exceeds a threshold value (Δpₛ) has taken place, and wherein, if this is the case, a triggering control (17) triggers the system, **characterized in that** the system can be activated in a reversible fashion and **in that** the threshold value (Δpₛ) is determined in such a way that its being exceeded corresponds to the sudden drop in pressure in the corresponding tyre (19) when there is a puncture.

6. Arrangement according to Claim 5, **characterized in that** the triggering control (17) actuates the clamping mechanism (15) of a reversible seatbelt pretensioning system.

7. Arrangement according to Claim 5 or 6, **characterized in that** the signal which indicates that the threshold value (Δpₛ) is exceeded is fed to a crash evaluation circuit (26) for use as a parameter which indicates that there is a directly imminent possibility of an accident.

8. Arrangement according to one of Claims 5 to 7, **characterized in that** the signal which indicates that the threshold value (Δpₛ) is exceeded is fed into a vehicle-mounted network.

## Revendications

1. Procédé de protection de l'occupant d'un véhicule lorsque se présente une situation potentiellement dangereuse, selon lequel
- à la saisie de cette situation on déclenche au moins un système commandé et associé au siège de l'occupant,
- on saisit en continu la valeur de la chute de pression (Δp) d'au moins un pneumatique (19), et
en cas de dépassement d'une valeur de seuil (Δps), on commande le déclenchement du système,
**caractérisé en ce que**
le système se commande de manière réversible et le seuil (Δps) est défini pour que son dépassement corresponde à la chute de pression brusque du pneumatique correspondant (19) en cas d'éclatement.

2. Procédé selon la revendication 1,
**caractérisé en ce que**
le système est un tendeur de ceinture réversible, pour bloquer l'occupant du véhicule sur son siège.

3. Procédé selon la revendication 1 ou 2,
**caractérisé en ce qu'**
en cas de déclenchement de la commande du système, celui-ci est jugé comme l'existence d'un risque imminent d'accident et transmet une information correspondante au moyen de commande (12, 26) pour adapter le seuil de déclenchement au déclenchement d'au moins un moyen de retenue tel qu'un coussin gonflable.

4. Procédé selon la revendication 3,
**caractérisé en ce que**
l'information correspondante est fournie à un réseau embarqué dans le véhicule pour être rendue disponible aux autres moyens de commande et pour servir et adapter les paramètres et/ou les seuils de déclenchement.

5. Dispositif pour la protection de l'occupant d'un véhicule en cas de situation potentiellement dangereuse, selon lequel
à la saisie de cette situation on déclenche au moins un système commandé et associé au siège de l'occupant du véhicule,
à l'aide d'un capteur de pression (20) on saisit la pression d'un pneumatique (19),
on examine la valeur de la pression pour déterminer s'il y a eu une chute de pression (Δp) dépassant un seuil (Δps), et
le cas échéant, une commande (17) déclenche le système,
**caractérisé en ce que**
le système est commandé de manière réversible et le seuil (Δps) est défini pour que son dépassement corresponde à la chute de pression brusque du pneumatique correspondant (19) en cas d'éclatement.

6. Dispositif pour la protection de l'occupant d'un véhicule selon la revendication 5,
**caractérisé en ce que**
la commande de déclenchement (19) du mécanisme de tension (15) commande un système de raidisseur de courroie réversible.

7. Dispositif pour la protection de l'occupant d'un véhicule selon les revendications 5 ou 6,
**caractérisé en ce que**
le dépassement du signal correspondant à la valeur du seuil (Δps) est appliqué à un circuit d'exploitation de collision (26) pour être utilisé comme un paramètre indiquant un risque imminent d'accident.

8. Dispositif pour la protection de l'occupant d'un véhicule selon l'une des revendications 5 à 7,
**caractérisé en ce que**
le signal indiquant le dépassement du seuil (Δps) est injecté dans un réseau embarqué dans le véhicule.
